# FASCICULE DE BREVET EUROPEEN

(11) **EP 1 602 995 B1**
(45) Date de publication et mention de la délivrance du brevet: **23.04.2008**
(21) Numéro de dépôt: 05291053.6
(22) Date de dépôt: 17.05.2005
(51) Int. Cl.: G05D 1/06

(54) **Procédé et dispositif pour construire une trajectoire de vol à basse altitude destinée a être suivie par un aéronef**
Verfahren und Vorrichtung zur Erzeugung einer Tiefflugbahn, die von einem Flugzeug zu folgen ist
Method and device for generating a low altitude flight path to be followed by an aircraft

(30) Priorité: 18.05.2004 FR 0405381
(43) Date de publication de la demande: 07.12.2005
(73) Titulaire: AIRBUS France, 31060 Toulouse (FR)
(72) Inventeur: Artini, Franck, 31000 Toulouse (FR)
(74) Mandataire: Hauer, Bernard

(56) Documents cités:
- EP-A- 0 565 399
- EP-A- 0 775 953
- FR-A- 2 813 963
- US-A- 3 998 412
- US-A- 5 706 011

## Description

La présente invention concerne un procédé et un dispositif pour construire une trajectoire de vol à basse altitude destinée à être suivie par un aéronef.

Dans le cadre de la présente invention, on entend par trajectoire de vol à basse altitude, une trajectoire de vol permettant à un aéronef de suivre au plus près le terrain survolé, tout en évitant tout risque de collision avec une partie dudit terrain. Une telle trajectoire de vol est donc située à une hauteur du terrain prédéterminée, par exemple 500 pieds (environ 150 mètres).

Plus particulièrement, bien que non exclusivement, la présente invention s'applique à un avion de transport militaire qui présente un faible rapport poussée/poids et une forte inertie, et dont les temps de manoeuvre sont relativement lents notamment par rapport à ceux d'un avion plus léger et très véloce, tel qu'un avion de combat par exemple. De plus, pour un tel avion de transport militaire, il est en général souhaitable que le guidage ne soit pas trop brusque, notamment pour le confort des passagers, et que ledit avion ne soit pas facilement détectable.

Par le document EP-0 775 953, on connaît un procédé de pilotage d'un aéronef en vol à basse altitude. Ce procédé connu comprend les étapes suivantes :
- la détermination par le pilote de l'aéronef, de buts sur un écran cartographique, de manière à définir un plan de vol découpé en segments, chaque segment étant défini entre deux buts ;
- la détermination par un calculateur dans l'aéronef, de trajectoires horizontales, le long des segments ;
- la détermination du profil de terrain à survoler, par le calculateur, ledit profil de terrain étant défini à partir d'un ensemble de points les plus hauts situés sur une trajectoire entre deux buts ; et
- la détermination d'une série de droites, de pentes qui tangentent le profil de terrain, lesdites droites définissant les consignes de vol en trajectoire verticale.

La présente invention a pour objet un procédé permettant de construire une trajectoire de vol à basse altitude destinée à être suivie par un aéronef, en particulier un avion de transport militaire, ladite trajectoire de vol comprenant une trajectoire latérale et une trajectoire verticale et étant construite à l'aide d'un profil de terrain (issu d'une base de données numériques ou d'un radar de cartographie) relatif à un terrain à survoler par l'aéronef.

Selon l'invention, ledit procédé selon lequel :
- on fournit un profil de terrain relatif à un terrain à survoler par l'aéronef, ainsi que des informations relatives à l'aéronef et à son environnement ;
- on construit ladite trajectoire latérale de la trajectoire de vol ; et
- on construit ladite trajectoire verticale de la trajectoire de vol, est remarquable en ce que l'on construit ladite trajectoire verticale, à partir du point le plus élevé du profil de terrain sur toute la section de trajectoire latérale sur laquelle on veut calculer une trajectoire de vol à basse altitude, en amont et en aval :

- en faisant se déplacer sur ledit profil de terrain un profil de construction en forme de V, dont les branches sont déterminées respectivement par des angles de montée et de descente maximaux de l'aéronef, prévus à cet endroit ; et
- en sélectionnant une position dudit profil de construction, pour laquelle ses bords arrivent en tangence dudit profil de terrain, et aucune crête dudit profil de terrain ne traverse ledit profil de construction, la position ainsi sélectionnée du profil de construction permettant à ce dernier de former la partie de la trajectoire verticale qui est située au niveau d'une section de profil définie entre deux maxima de hauteur dudit profil de terrain,
   et en ce que les différents maxima de hauteur pris en compte pour former la trajectoire verticale sont extraits dudit profil de terrain à partir dudit point le plus élevé.

Dans ce cas, avantageusement :
- les deux branches du profil de construction en forme de V se rejoignent suivant une phase de transition en arc de cercle ; et/ou
- les deux maxima de hauteur du profil de terrain, permettant de définir une section de profil à prendre en compte, sont séparés horizontalement d'au moins une distance correspondant à une longueur minimale relative à un segment de la trajectoire verticale ; et/ou
- dans le cas où le profil de construction ne peut pas s'inscrire entre lesdits deux maxima de hauteur, on augmente l'angle entre les deux branches dudit profil de construction jusqu'à permettre cette inscription.

Dans un mode de réalisation préféré, la trajectoire latérale de la trajectoire de vol est formée, dans un plan horizontal, par une succession de branches qui sont rectilignes et qui sont séparées les unes des autres par des premières phases de transition (curvilignes).

Dans ce cas, avantageusement, au moins l'une desdites premières phases de transition, entre deux branches successives, correspond à un arc de cercle à rayon de courbure constant (dépendant d'un facteur de charge maximal admissible).

De façon avantageuse, deux branches successives se croisent en un point tournant, audit point tournant on associe une condition de survol relative à une obligation de survol ou non de ce point tournant par l'aéronef, et la première phase de transition correspondante tient compte de cette condition de survol.

Par ailleurs, dans un mode de réalisation préféré, la trajectoire verticale de la trajectoire de vol est formée, dans un plan vertical, par une succession de segments qui sont rectilignes et qui présentent une pente constante.

De façon avantageuse, la pente de chacun desdits segments est déterminée en fonction dudit profil de terrain et de performances (de montée et de descente) de l'aéronef et se trouve dans un domaine de valeurs de pente, limité par un angle de montée maximal et un angle de descente maximal, caractéristiques de ces performances attendues. Entre ces deux valeurs de pente qui sont les valeurs maximales que l'aéronef peut atteindre, la pente est ajustée en fonction du profil et de contraintes telles qu'une distance minimale dmin précisée ci-dessous.

De plus, avantageusement, lesdits angles de montée et de descente maximaux dépendent de conditions de vol qui sont prédites sur le segment correspondant.

Premièrement, ledit angle de montée maximal est déterminé, de préférence, à partir des conditions de vol suivantes, qui sont prédites sur ledit segment :
- la poussée continue maximale de l'aéronef avec un moteur en panne ;
- le vent prédit ;
- la température extérieure prédite ;
- la masse de l'aéronef ;
- l'altitude maximale dudit segment ;
- la configuration aérodynamique prédite de l'aéronef ; et
- la vitesse de consigne sur ledit segment.

Deuxièmement, ledit angle de descente maximal est déterminé, de préférence, à partir des conditions de vol suivantes, qui sont prédites sur ledit segment :
- la poussée au ralenti de l'aéronef avec tous ses moteurs en fonctionnement ;
- le vent prédit ;
- la température extérieure prédite ;
- la masse de l'aéronef ;
- l'altitude maximale dudit segment ;
- la configuration aérodynamique prédite de l'aéronef ; et
- la vitesse de consigne sur ledit segment.

Par ailleurs, dans un mode de réalisation préféré, chaque segment présente une longueur minimale prédéterminée. Ainsi, on réduit le nombre de points de cassure de la trajectoire verticale, ce qui permet :
- de réduire la charge de travail de l'équipage ; et
- d'améliorer le confort des passagers, notamment sur des avions lourds.

Dans ce cas, avantageusement, pour pouvoir suivre au plus près le profil de terrain, on tient compte des caractéristiques suivantes pour construire ladite trajectoire verticale :
- une montée à angle de montée maximal est privilégiée par rapport à une descente à angle de descente maximal, dans le cas où le profil de terrain tend à s'élever entre deux maxima de hauteur ; et
- une descente à angle de descente maximal est privilégiée par rapport à une montée à angle de montée maximal, dans le cas où le profil de terrain tend à baisser entre deux maxima de hauteur.

La présente invention concerne également un dispositif pour construire une trajectoire de vol à basse altitude destinée à être suivie par un aéronef, en particulier un avion de transport militaire, ladite trajectoire de vol comprenant une trajectoire latérale et une trajectoire verticale.

Selon l'invention, ledit dispositif du type comportant :
- un moyen fournissant un profil de terrain relatif à un terrain à survoler par l'aéronef ;
- un ensemble de sources d'informations embarquées, susceptibles d'engendrer des informations relatives à l'aéronef et à son environnement ;
- un premier moyen pour construire ladite trajectoire latérale de la trajectoire de vol ; et
- un deuxième moyen pour construire ladite trajectoire verticale de la trajectoire de vol,
   est remarquable en ce que ledit deuxième moyen construit ladite trajectoire verticale, à partir du point le plus élevé du profil de terrain sur toute la section de trajectoire latérale sur laquelle on veut calculer une trajectoire de vol à basse altitude, en amont et en aval :
   - en faisant se déplacer sur ledit profil de terrain un profil de construction en forme de V, dont les branches sont déterminées respectivement par des angles de montée et de descente maximaux de l'aéronef, prévus à cet endroit ; et
   - en sélectionnant une position dudit profil de construction, pour laquelle ses bords arrivent en tangence dudit profil de terrain, et aucune crête dudit profil de terrain ne traverse ledit profil de construction, la position ainsi sélectionnée du profil de construction permettant à ce dernier de former la partie de la trajectoire verticale qui est située au niveau d'une section de profil définie entre deux maxima de hauteur dudit profil de terrain, les différents maxima de hauteur pris en compte pour former la trajectoire verticale étant extraits dudit profil de terrain à partir dudit point le plus élevé.

Les figures du dessin annexé feront bien comprendre comment l'invention peut être réalisée. Sur ces figures, des références identiques désignent des éléments semblables.
La figure 1 est le schéma synoptique d'un dispositif conforme à l'invention.
Les figures 2 à 4 sont des graphiques permettant d'expliquer la construction d'une trajectoire latérale.
Les figures 5 à 17 sont des graphiques permettant d'expliquer la construction d'une trajectoire verticale.
Les figures 18 à 22 montrent schématiquement des cas particuliers lors de la construction d'une trajectoire verticale, dans une phase de montée.
Les figures 23 à 26 montrent schématiquement des cas particuliers lors de la construction d'une trajectoire verticale, dans une phase de descente.

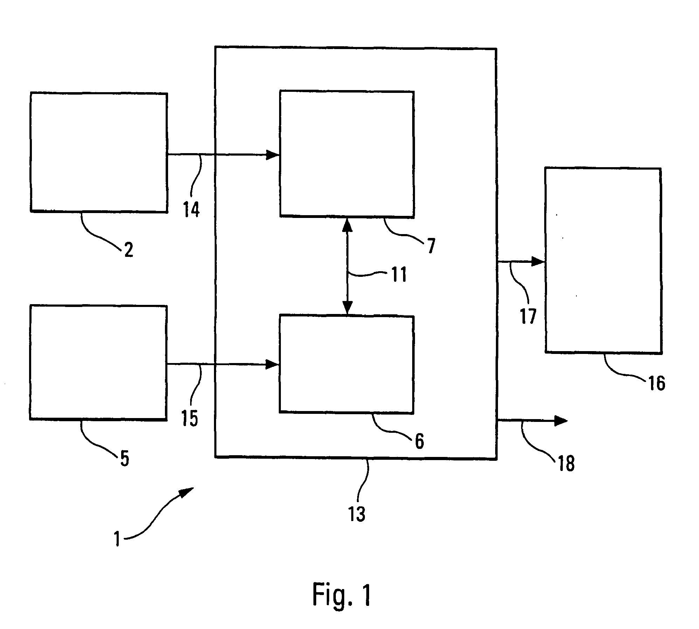

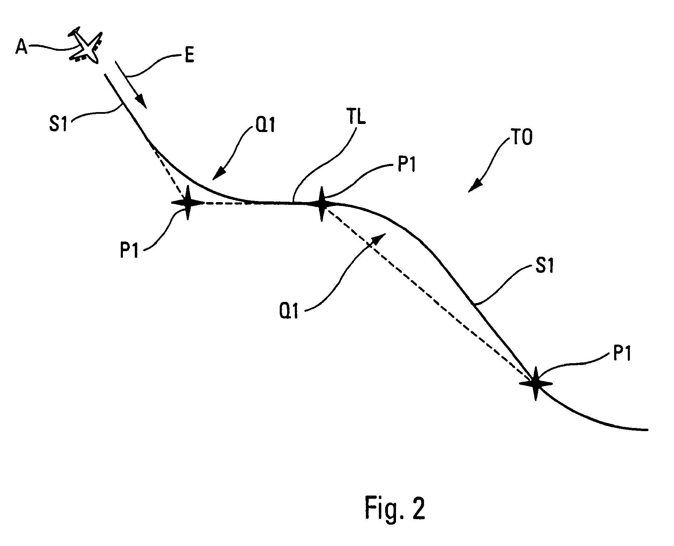

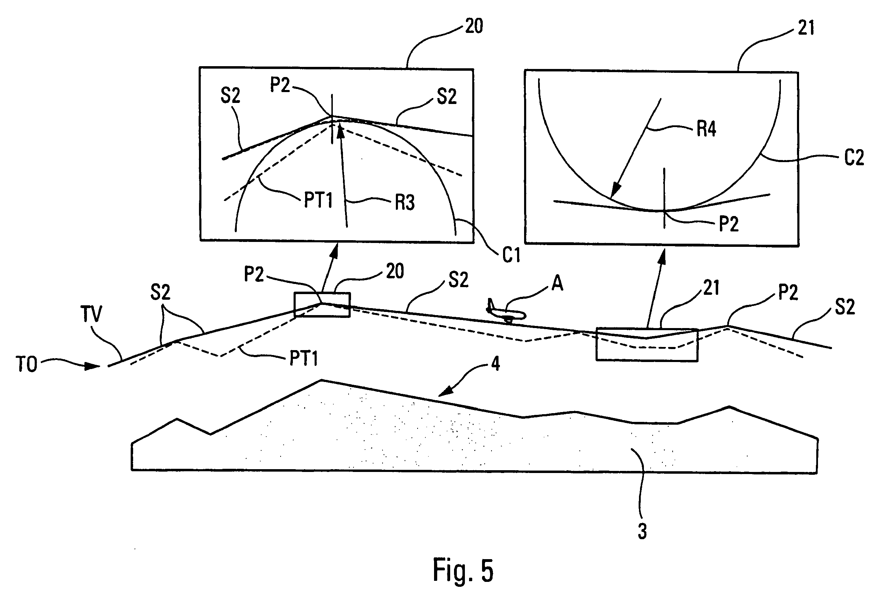

Le dispositif 1 conforme à l'invention et représenté schématiquement sur la figure 1, a pour objet la construction d'une trajectoire de vol TO à basse altitude destinée à être suivie par un aéronef A, en particulier un avion de transport militaire. Ladite trajectoire de vol TO comprend une trajectoire latérale TL qui est définie dans un plan horizontal et représentée partiellement sur la figure 2 et une trajectoire verticale TV (ou profil de vol) qui est définie dans un plan vertical et représentée partiellement sur la figure 5.

Ladite trajectoire de vol TO est une trajectoire de vol à basse altitude permettant à l'aéronef A de suivre au plus près le terrain 3 survolé.

Pour ce faire, ledit dispositif 1 qui est embarqué sur l'aéronef A est du type comportant :
- un moyen 2 fournissant un profil de terrain PT1 relatif au terrain 3 à survoler par l'aéronef A, dont le relief 4 est représenté sur la figure 5. Dans l'exemple de la figure 5, le profil de terrain PT1 est situé à une hauteur de garde prédéterminée au-dessus dudit relief 4. Ledit moyen 2 peut être une base de données numériques, embarquée et contenant le profil de terrain PT1, ou un dispositif, tel qu'un radar en mode cartographie par exemple, pour élaborer ledit profil de terrain PT1 à bord de l'aéronef A ;
- un ensemble 5 de sources d'informations embarquées, susceptibles d'engendrer des informations (telles que la masse, la vitesse ou les performances maximales de descente et de montée) relatives à l'aéronef A et des informations relatives à son environnement (vent, température, ...) ;
- un moyen 6 pour construire ladite trajectoire latérale TL de la trajectoire de vol TO ; et
- un moyen 7 pour construire ladite trajectoire verticale TV de la trajectoire de vol TO.

Dans un mode de réalisation particulier, représenté sur la figure 1 :
- ledit moyen 6 est relié par une liaison 11 audit moyen 7 ;
- lesdits moyens 6 et 7 sont regroupés dans une unité centrale 13 qui est reliée par des liaisons 14 et 15 au moyen 2 et à l'ensemble 5 de sources d'informations ; et
- ledit dispositif 1 comporte, de plus, un moyen d'affichage 16 qui est relié par une liaison 17 à l'unité centrale 13 et qui est susceptible de présenter à un pilote les résultats des traitements mis en oeuvre par ladite unité centrale 13. Ceci permet notamment à un pilote de vérifier visuellement si le résultat du calcul de la trajectoire verticale TV n'est pas absurde au regard dudit profil de terrain PT1. Ces résultats peuvent également être transmis à d'autres dispositifs utilisateurs non représentés, et notamment à un système de guidage usuel de l'aéronef A, par l'intermédiaire d'une liaison 18.

Dans un mode de réalisation préféré, ladite trajectoire latérale TL de la trajectoire de vol TO qui est déterminée par le moyen 6 est formée, dans un plan horizontal, par une succession de branches S1 qui sont rectilignes et qui se rejoignent à des points P1 dits "abscisses curvilignes", comme représenté sur la figure 2. Pour que l'aéronef A puisse voler le long de ladite trajectoire latérale TL, lesdites branches S1 sont séparées les unes des autres par des phases de transition Q1, auxdits points P1.

Ladite trajectoire latérale TL est déterminée à partir d'un plan de vol latéral qui comprend :
- la suite des points P1 qui sont définis par un opérateur, en particulier par le pilote, en longitude et latitude ; et
- pour chacun de ces points P1, l'une de deux contraintes :
   ■ une contrainte (ou condition) de survol obligeant à survoler le point P1 correspondant, comme représenté pour le second point P1 de la figure 2 dans le sens de vol E de l'aéronef A ; et
   ■ une contrainte d'anticipation obligeant à anticiper le virage au point P1 et donc à ne pas survoler ce dernier, comme représenté pour le premier point P1 de la figure 2.

Grâce à ces contraintes, le moyen 6 peut déterminer le type de transition pour la phase de transition Q1 correspondante, à savoir :
- soit une transition avec obligation de survol ;
- soit une transition avec anticipation du virage.

En cas d'absence de définition de telles contraintes, le moyen 6 peut utiliser une contrainte par défaut, de préférence ladite contrainte avec obligation de survol.

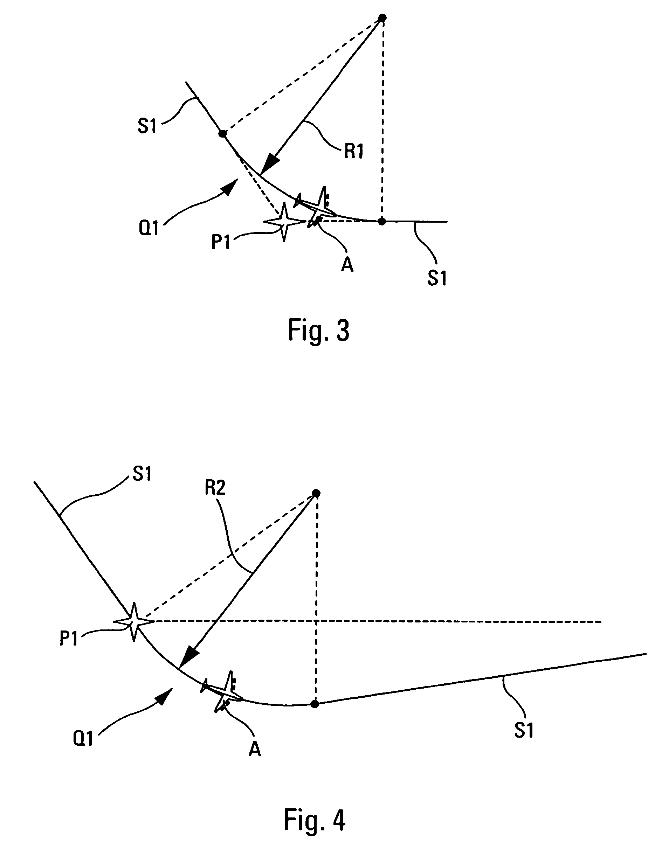

Pour construire une phase de transition, on prévoit un arc de cercle Q1 à rayon de courbure R1, R2 constant (qui dépend d'un facteur de charge maximal admissible), comme représenté sur la figure 3 (associé à une anticipation du virage) ou comme représenté sur la figure 4 (associé à une obligation de survol).

Dans un mode de réalisation préféré, ladite trajectoire verticale TV de la trajectoire de vol TO qui est déterminée par le moyen 7 est formée, dans un plan vertical, par une succession de segments S2 qui sont rectilignes et qui présentent une pente constante, comme représenté sur la figure 5.

La trajectoire verticale TV peut comporter, en montée, des séquences de montée consécutives à pentes variables, pour suivre au mieux le profil du terrain 3, et inversement en descente. Chaque segment S2 de la trajectoire verticale TV présente une longueur minimale dmin prédéterminée, correspondant de préférence à une durée de vol particulière (par exemple 15 secondes de vol à la vitesse de consigne). Cette longueur minimale doit permettre d'insérer des transitions à piquer ou à cabrer, en fonction des performances de montée ou de descente maximales prédites de l'aéronef A. Toutefois, pour ne pas pénaliser le suivi du terrain 3, cette condition de longueur minimale peut ne pas être vérifiée pour un certain nombre (limité) de fois, par exemple au passage de la crête la plus haute du terrain 3. Dans ce cas, afin de suivre au plus près le terrain 3, on tient compte des caractéristiques suivantes, pour construire ladite trajectoire verticale TV :
- une montée à angle de montée maximal est privilégiée par rapport à une descente à angle de descente maximal, dans le cas où le profil de terrain PT1 tend à s'élever entre deux maxima de hauteur, c'est-à-dire dans une phase de montée ; et
- une descente à angle de descente maximal est privilégiée par rapport à une montée à angle de montée maximal, dans le cas où le profil de terrain PT1 tend à baisser entre deux maxima de hauteur, c'est-à-dire dans une phase de descente.

En outre, la pente γ de chacun desdits segments S2 est déterminée en fonction dudit profil de terrain PT1 et de performances anticipées de l'aéronef A et se trouve dans un domaine de valeurs de pente, limité par un angle de montée maximal γ1max et un angle de descente maximal γ2max, que peut atteindre l'aéronef A.

De plus, lesdits angles de montée et de descente maximaux γ1max et γ2max dépendent de conditions de vol qui sont prédites sur le segment S2 correspondant.

Premièrement, ledit angle de montée maximal γ1max est déterminé à partir des conditions de vol suivantes, qui sont prédites sur ledit segment S2 :
- la poussée continue maximale de l'aéronef A avec l'un de ses moteurs en panne ;
- le vent prédit ;
- la température extérieure prédite ;
- la masse de l'aéronef A. On sait que la masse varie. On peut donc, soit prédire ses variations (par exemple en tenant compte de la consommation de carburant sur la trajectoire), soit la considérer comme constante (en restant alors conservatif au niveau des performances de montée et de descente) ;
- l'altitude maximale dudit segment S2 ;
- la configuration aérodynamique prédite de l'aéronef A sur ledit segment S2 ; et
- la vitesse de consigne sur ledit segment S2.

Deuxièmement, ledit angle de descente maximal γ2max est déterminé à partir des conditions de vol suivantes, qui sont prédites sur ledit segment S2 :
- la poussée au ralenti de l'aéronef A avec tous ses moteurs en fonctionnement ;
- le vent prédit ;
- la température extérieure prédite ;
- la masse de l'aéronef A, obtenue comme indiqué ci-dessus ;
- l'altitude maximale dudit segment S2 ;
- la configuration aérodynamique prédite de l'aéronef A sur ledit segment S2 ; et
- la vitesse de consigne sur ledit segment S2.

Les phases de transition Q2 entre deux segments S2 consécutifs dans le plan vertical consistent :
- en une ressource effectuée à facteur de charge positif constant, si la différence de pente entre lesdits deux segments S2 est positive ; et
- en un piqué effectué à facteur de charge négatif constant, si la différence de pente entre lesdits deux segments consécutifs S2 est négative.

Sur la figure 5, on a représenté, dans deux fenêtres agrandies 20 et 21, deux phases de transition Q2 à rayon R3, R4 constant (illustré par une partie d'un cercle C1, C2) de la trajectoire verticale TV, correspondant respectivement à un piqué et à une ressource.

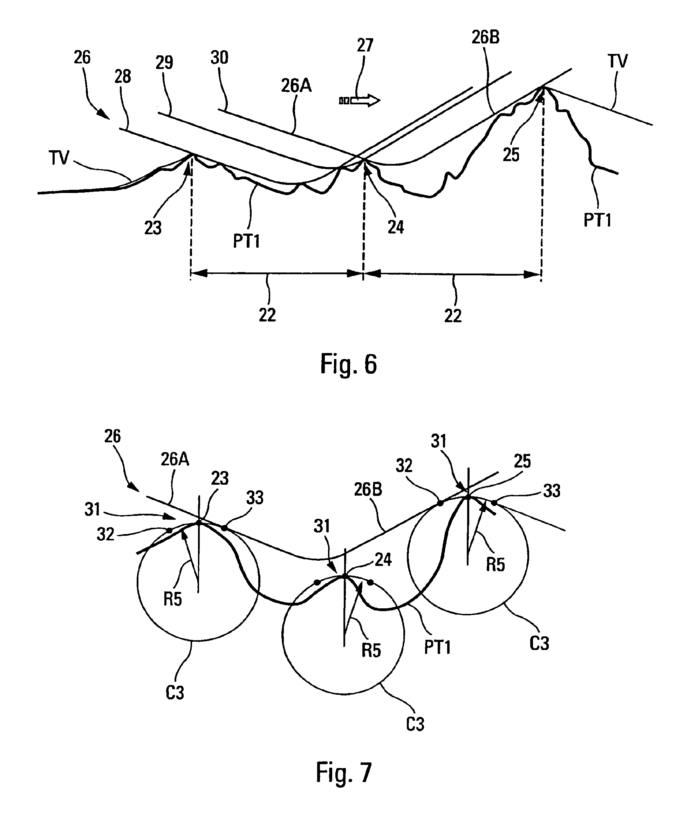

Selon l'invention, ledit moyen 7 forme ladite trajectoire verticale TV, sur une section de profil 22 entre deux maxima de hauteur 23 et 24 ou 24 et 25 dudit profil de terrain PT1 :
- en déplaçant sur ledit profil de terrain PT1, comme représenté par une flèche 27 sur la figure 6, un profil de construction 26, dont on a montré trois positions différentes 28, 29 et 30 sur ladite figure 6. Ledit profil de construction 26 présente une forme en V, dont les branches 26A et 26B sont déterminées respectivement par les angles de montée et de descente maximaux, comme précisé ci-dessous. De préférence, lesdites branches 26A et 26B se rejoignent suivant une phase de transition en arc de cercle ; et
- en sélectionnant une position dudit profil de construction 26, pour laquelle ses bords arrivent en tangence (de cercles C3 précisés ci-dessous) dudit profil de terrain PT1, et aucune crête dudit profil du terrain PT1 ne traverse ledit profil de construction 26. La position ainsi sélectionnée dudit profil de construction 26 permet de former la partie de ladite trajectoire verticale TV qui est située au niveau de ladite section de profil 22. Le profil de construction 26 représente la manoeuvre la plus serrée que puisse engager l'aéronef A, dans les conditions (masse, poussée, ...) prédites, pour remonter et passer une crête, tout en essayant d'atteindre le point le plus bas possible dans le creux d'une vallée. La trajectoire verticale TV est donc déterminée sur toute la section de profil 22 de telle manière que l'aéronef A est sûr de passer la crête la plus haute, tout en essayant de descendre au plus bas.

Lorsque le profil de construction 26 est déplacé sur le profil de terrain PT1, il forme la trajectoire verticale TV qui est réellement volable vis-à-vis des performances de l'aéronef A. Ceci permet d'éliminer un grand nombre de données numériques de terrain (issues des moyens 2) qui ne sont jamais accessibles par l'aéronef A.

Toutefois, le suivi de terrain est optimisé, afin de ne pas passer trop haut au-dessus des crêtes. Pour cela, on adapte des transitions en piqué sur les maxima de hauteur 23, 24, 25. Le profil de construction 26 doit alors venir en tangence avec la transition en piqué qui est à rayon constant. L'arc de cercle 31 correspondant à cette transition est délimité par des points 32 et 33 qui représentent respectivement la pente à montée maximale et la pente à descente maximale, comme représenté sur la figure 7. La trajectoire verticale TV est calculée à partir du point le plus élevé du profil de terrain PT1 (sur toute la section de trajectoire latérale sur laquelle on veut calculer une trajectoire verticale basse altitude), en amont puis en aval, en faisant se déplacer le profil de construction 26 le long du profil de terrain PT1, dont les maxima de hauteur 23, 24 et 25 sont coiffés de la transition en arc de cercle 31 (partie du cercle C3 de rayon R5).

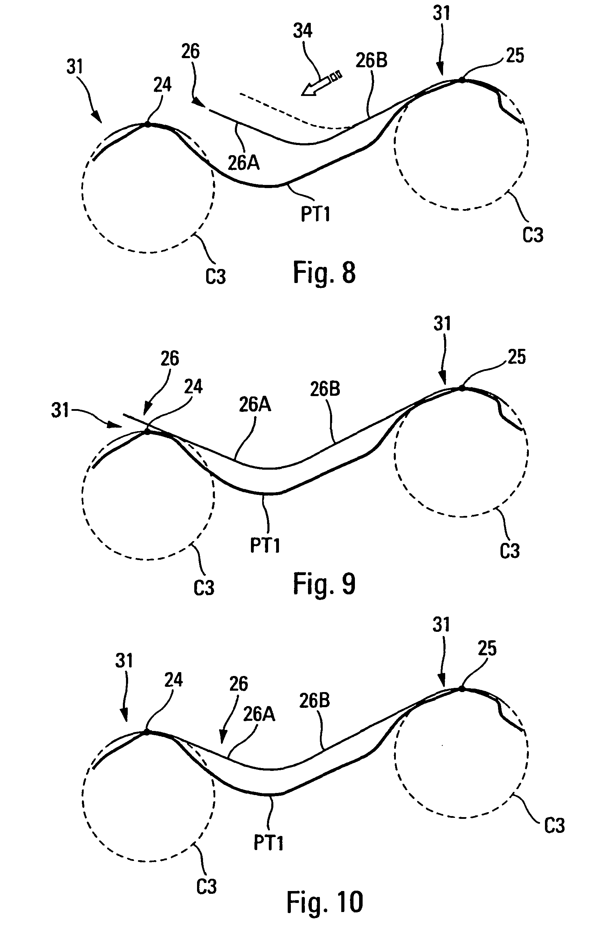

Le premier maximum de hauteur à prendre en compte est le sommet le plus élevé sur toute la trajectoire latérale de calcul. En effet, l'aéronef A doit franchir cette crête. Ensuite, les maxima de hauteur sont extraits du profil de terrain PT1 à partir de ce sommet le plus élevé, en tenant compte de la longueur minimale dmin des segments S2. En partant d'un maximum de hauteur donné, par exemple la crête 25 la plus haute sur toute la trajectoire latérale, coiffée de l'arc de cercle de transition 31, on fait glisser le profil de construction 26, comme illustré par une flèche 34 sur la figure 8, jusqu'à ce qu'il arrive au contact avec un arc de cercle de transition 31 correspondant à un maximum de hauteur 24, comme représenté sur la figure 9. On peut alors former la trajectoire verticale TV, comme illustré sur la figure 10 correspondante.

Le cas nominal d'une telle construction correspond au cas où :
- l'écartement maximal des branches 26A et 26B du profil de construction 26 peut s'inscrire dans le creux de vallée entre deux maxima de hauteur successifs 24 et 25, coiffés des arcs de cercle de transition 31 correspondants ; et
- la longueur dd du segment de descente (relatif à la branche 26A) et la longueur dm du segment de montée (relatif à la branche 26B), mesurées horizontalement, sont supérieures ou égales à une distance minimale correspondant à la longueur minimale dmin précitée desdits segments S2.

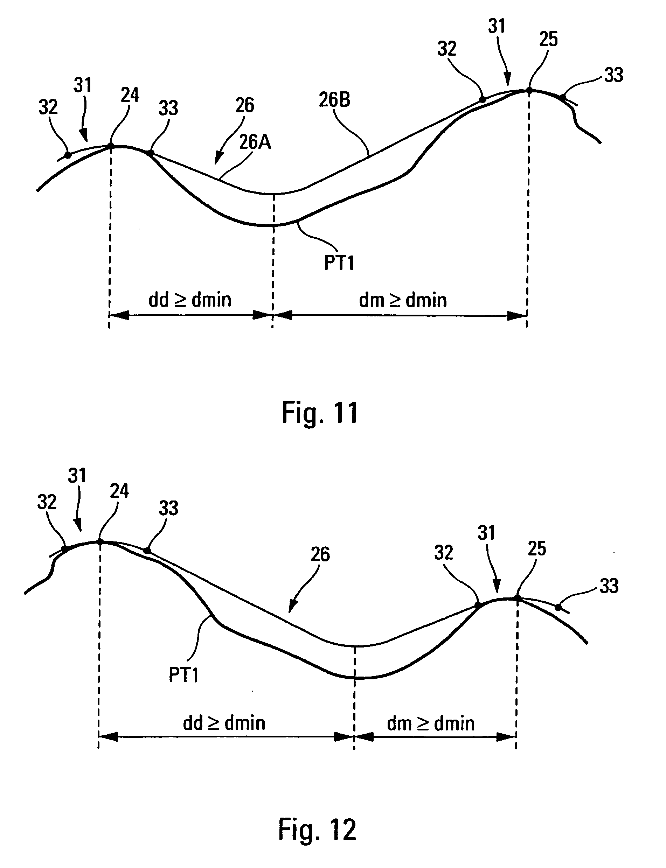

Ce cas nominal est représenté :
- pour une montée, sur la figure 11 ; et
- pour une descente, sur la figure 12.

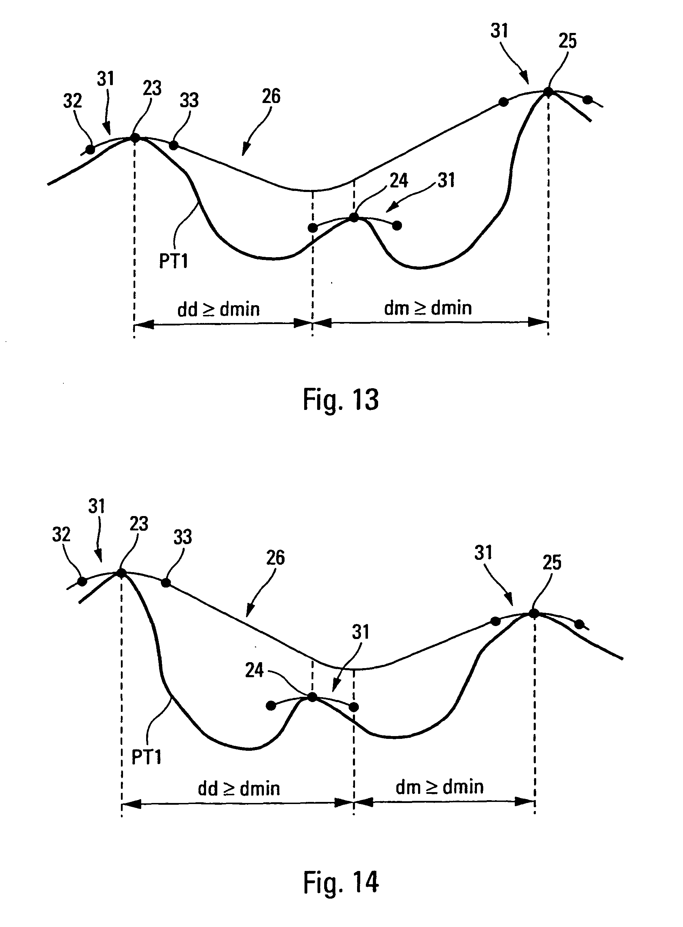

Par ailleurs, dans le cas où le profil de construction 26 ne peut pas atteindre le maximum de hauteur précédent ou suivant 24, on se retrouve dans le cas précité en considérant le premier maximum de hauteur (en amont dans le cas d'une montée, et en aval dans le cas d'une descente), dans lequel le profil de construction 26 peut s'inscrire (c'est-à-dire entre deux maxima de hauteur 23 et 25 non directement consécutifs). Le maximum de hauteur 24 intermédiaire n'est donc à chaque fois pas atteint, ni en montée (figure 13), ni en descente (figure 14).

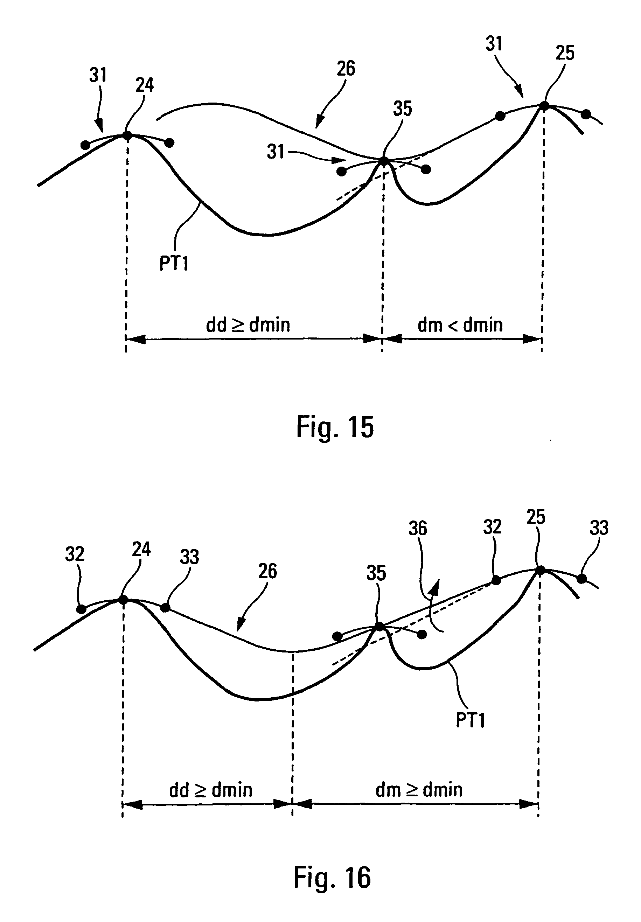

Par ailleurs, dans le cas où le profil de construction 26 ne peut pas s'inscrire entre deux maxima de hauteur 24 et 25, parce que :
- il intercepte un relief intermédiaire 35 ; et
- les contraintes de distance minimale dmin ne sont pas respectées, on diminue la profondeur dudit profil de construction 26 (figure 15).

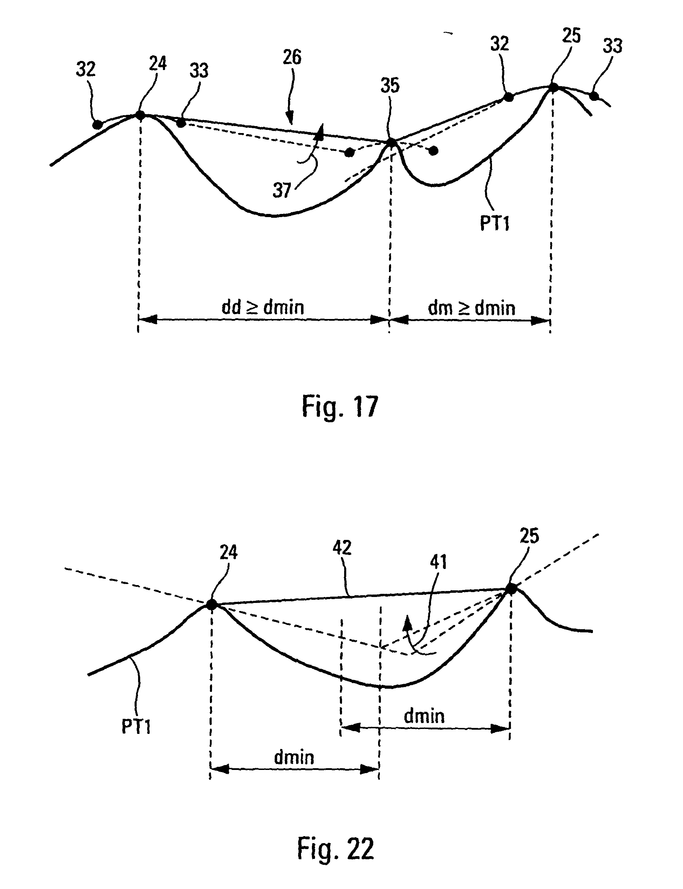

Plus précisément :
- la pente de montée est relâchée, comme illustrée par une flèche 36 sur la figure 16, pour passer l'obstacle intermédiaire 35, lorsque les contraintes de distance minimale (dd ≥ dmin et dm ≥ dmin) sur les nouveaux segments sont respectées ;
- dans le cas où le segment initial de montée respecte la contrainte de distance (dm ≥ dmin), on relâche la pente de descente, comme illustré par une flèche 37 sur la figure 17 ; et
- dans les autres cas, on construit la trajectoire verticale TV sur la section de profil 22 considérée, de sorte que l'aéronef A descende au plus bas dans les creux du relief 4 du terrain 3.

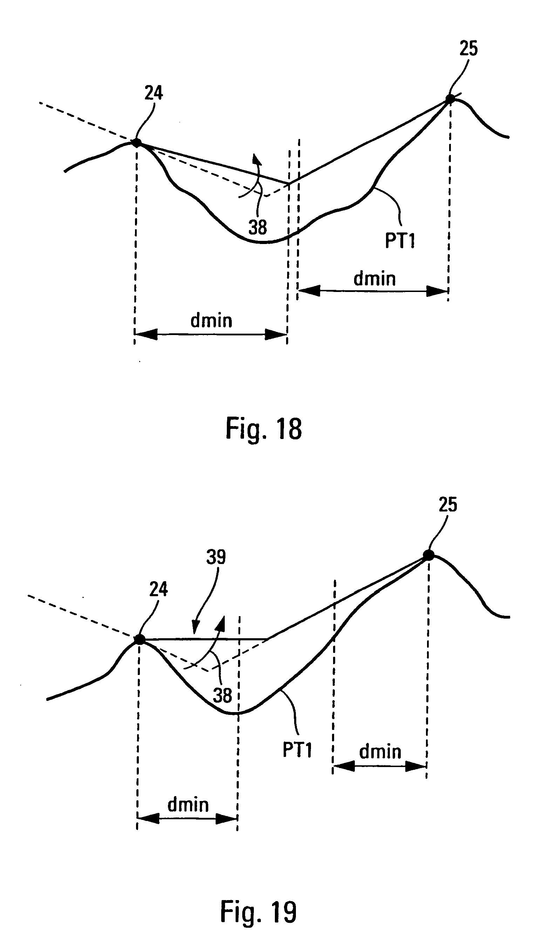

Par ailleurs, dans le cas d'une phase de montée (figures 18 à 22), on privilégie une montée à pente maximale. Lorsque les contraintes de distance sont respectées, on ajuste le profil de construction 26 en diminuant la pente du segment de descente, comme illustré par une flèche 38 sur la figure 18, en se limitant le cas échéant à une pente de descente nulle, tout en conservant la pente de montée maximale. La pente de descente retenue doit être telle que la distance dm soit égale à la distance minimale dmin et que la distance dd reste supérieure ou égale à ladite distance minimale dmin (figure 18). De plus, la diminution de la pente de descente peut être telle que la montée est précédée par un palier 39, comme représenté sur la figure 19, lorsque les contraintes de distance minimale sont respectées.

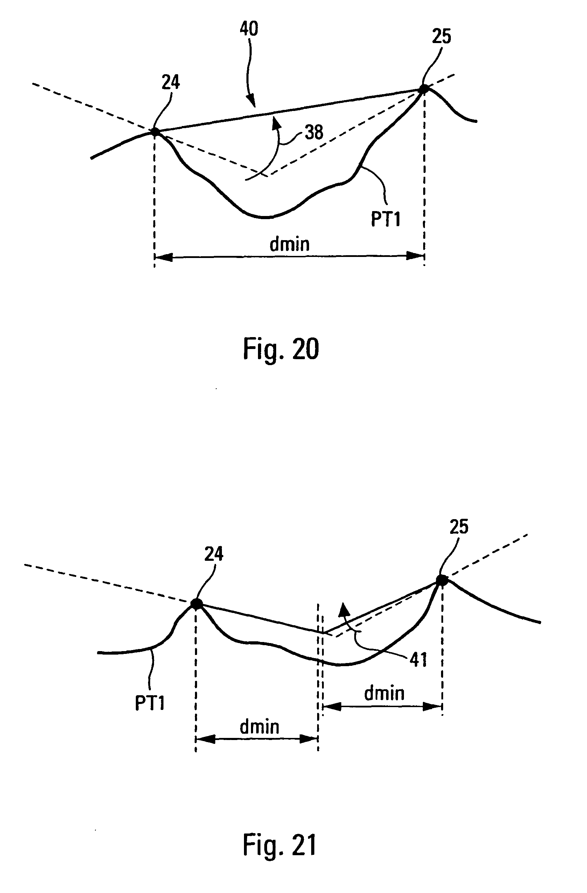

En outre, si en diminuant la pente de descente, la distance dm devient égale à la distance dmin, sans que la distance dd n'atteigne la distance dmin, alors la trajectoire verticale TV est définie à pente constante entre les maxima de hauteur 24 et 25, comme représenté par un segment unique 40 sur la figure 20.

Dans le cas où :
- dd est supérieur ou égal à dmin ; et
- dm est inférieur à dmin,
   on effectue l'ajustement en diminuant la pente du segment de montée, comme représenté par une flèche 41 sur la figure 21, tout en conservant la pente de descente maximale, la pente de montée retenue doit être telle que les distances dd et dm soient supérieures ou égales à la distance dmin. Si, en diminuant la pente de montée, la distance dd devient égale à la distance dmin, sans que la distance dm n'atteigne la distance dmin, la trajectoire verticale TV est définie à pente constante entre les maxima de hauteur 24 et 25 le long d'un segment unique 42 (figure 22).

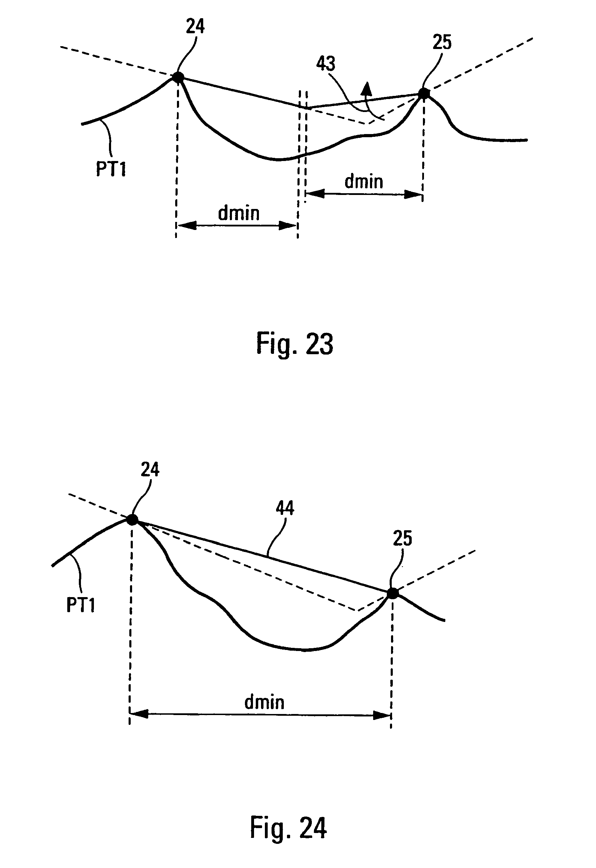

Par ailleurs, dans le cas d'une phase de descente (figures 23 à 26), c'est-à-dire lorsqu'un maximum de hauteur 24 est plus élevé que le maximum de hauteur 25 qui le suit, on privilégie une descente à pente maximale.

Dans le cas où le profil de construction 26 s'inscrit de sorte que la distance dd est supérieure ou égale à la distance dmin, mais que la distance dm est inférieure à la distance dmin, l'ajustement est effectué en diminuant la pente du segment de montée, comme illustré par une flèche 43 sur la figure 23, en se limitant à une pente de montée nulle, tout en conservant la pente de descente maximale. Dans ce cas, la pente de montée retenue doit être telle que les distances dm et dd soient supérieures ou égales à la distance dmin.

La diminution de la pente de montée peut être telle que la descente est suivie par un palier si les deux segments sont de longueur suffisante. Si, en diminuant la pente de montée, la distance dd devient égale à la distance dmin, sans que la distance dm n'atteigne la distance dmin, alors la trajectoire verticale TV est effectuée à pente constante entre les maxima de hauteur 24 et 25 le long d'un segment unique 44, comme représenté sur la figure 24.

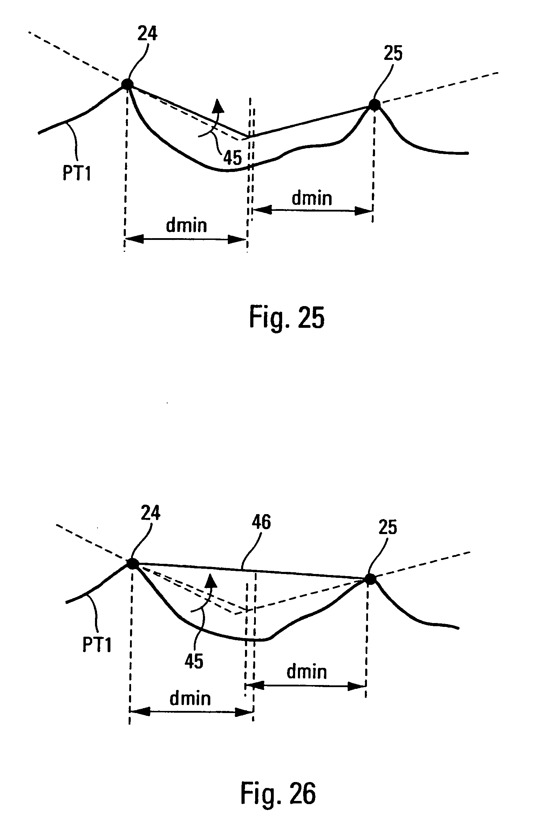

Par ailleurs, dans le cas où la distance dm est supérieure ou égale à la distance dmin, alors que la distance dd reste inférieure à la distance dmin, l'ajustement est effectué en diminuant la pente de descente (flèche 45 sur la figure 25), tout en conservant la pente de montée maximale. La pente de descente retenue doit être telle que les distances dm et dd soient supérieures ou égales à la distance dmin, comme représenté sur cette figure 28.

Si, en diminuant la pente de descente, la distance dm devient égale à la distance dmin, sans que la distance dd n'atteigne la distance dmin, alors la trajectoire verticale TV est définie à pente constante entre les maxima de hauteur 24 et 25 le long d'un segment unique 46, comme représenté sur la figure 26.

Par ailleurs, dans le cas où les distances dd et dm sont inférieures à la distance dmin et que la distance entre les deux maxima de hauteur considérés 24 et 25 est supérieure à la distance dmin, on effectue la descente entre ces deux maxima de hauteur 24 et 25 de façon directe sans ressource intermédiaire.

## Revendications

1. Procédé pour construire une trajectoire de vol (TO) à basse altitude destinée à être suivie par un aéronef (A), en particulier un avion de transport militaire, ladite trajectoire de vol (TO) comprenant une trajectoire latérale (TL) et une trajectoire verticale (TV), procédé selon lequel :
- on fournit un profil de terrain (PT1) relatif à un terrain à survoler par l'aéronef (A), ainsi que des informations relatives à l'aéronef (A) et à son environnement ;
- on construit ladite trajectoire latérale (TL) de la trajectoire de vol (TO) ; et
- on construit ladite trajectoire verticale (TV) de la trajectoire de vol (TO),
**caractérisé en ce que** l'on construit ladite trajectoire verticale (TV), à partir du point le plus élevé du profil de terrain (PT1) sur toute la section de trajectoire latérale (TL) sur laquelle on veut calculer une trajectoire de vol (TO) à basse altitude, en amont et en aval :
- en faisant se déplacer sur ledit profil de terrain (PT1) un profil de construction (26) en forme de V, dont les branches (26A, 26B) sont déterminées respectivement par des angles de montée et de descente maximaux de l'aéronef, prévus à cet endroit ; et
- en sélectionnant une position dudit profil de construction (26), pour laquelle ses bords arrivent en tangence dudit profil de terrain (PT1), et aucune crête dudit profil de terrain (PT1) ne traverse ledit profil de construction (26), la position ainsi sélectionnée du profil de construction (26) permettant à ce dernier de former la partie de la trajectoire verticale (TV) qui est située au niveau d'une section de profil (22) définie entre deux maxima de hauteur (23, 24, 25) dudit profil de terrain (PT1), et **en ce que** les différents maxima de hauteur (23, 24,25) pris en compte pour former la trajectoire verticale (TV) sont extraits dudit profil de terrain (PT1) à partir dudit point le plus élevé.

2. Procédé selon la revendication 1,
**caractérisé en ce que** les deux branches (26A, 26B) du profil de construction (26) en forme de V se rejoignent suivant une phase de transition en arc de cercle.

3. Procédé selon l'une des revendications 1 et 2,
**caractérisé en ce que** deux maxima de hauteur (23, 24, 25) du profil de terrain (PT1), permettant de définir une section de profil (22) à prendre en compte, sont séparés horizontalement d'au moins une distance correspondant à une longueur minimale (dmin) relative à un segment (S2) de la trajectoire verticale (TV).

4. Procédé selon l'une quelconque des revendications 1 à 3,
**caractérisé en ce que**, dans le cas où le profil de construction (26) ne peut pas s'inscrire entre lesdits deux maxima de hauteur (23, 24, 25), on augmente l'angle entre les deux branches (26A, 26B) dudit profil de construction (26) jusqu'à permettre cette inscription.

5. Procédé selon l'une quelconque des revendications précédentes,
**caractérisé en ce que** ladite trajectoire latérale (TL) de la trajectoire de vol (TO) est formée, dans un plan horizontal, par une succession de branches (S1) qui sont rectilignes et qui sont séparées les unes des autres par des premières phases de transition (Q1).

6. Procédé selon la revendication 5,
**caractérisé en ce qu'**au moins l'une desdites premières phases de transition (Q1), entre deux branches (S1) successives, correspond à un arc de cercle à rayon de courbure (R1, R2) constant.

7. Procédé selon l'une quelconque des revendications 5 et 6,
**caractérisé en ce que** deux branches (S1) successives se croisent en un point tournant (P1), **en ce qu'**audit point tournant, on associe une condition de survol relative à une obligation de survol ou non de ce point tournant (P1) par l'aéronef (A), et **en ce que** la première phase de transition (Q1) correspondante tient compte de cette condition de survol.

8. Procédé selon l'une quelconque des revendications précédentes,
**caractérisé en ce que** ladite trajectoire verticale (TV) de la trajectoire de vol (TO) est formée, dans un plan vertical, par une succession de segments (S2) qui sont rectilignes et qui présentent une pente constante.

9. Procédé selon la revendication 8,
**caractérisé en ce que** la pente de chacun desdits segments (S2) est déterminée en fonction dudit profil de terrain (PT1) et de performances de l'aéronef (A) et se trouve dans un domaine de valeurs de pente, limité par un angle de montée maximal et un angle de descente maximal.

10. Procédé selon la revendication 9,
**caractérisé en ce que** lesdits angles de montée et de descente maximaux dépendent de conditions de vol qui sont prédites sur le segment (S2) correspondant.

11. Procédé selon la revendication 10,
**caractérisé en ce que** ledit angle de montée maximal est déterminé à partir des conditions de vol suivantes, qui sont prédites sur ledit segment (S2) :
- la poussée continue maximale de l'aéronef (A) avec un moteur en panne ;
- le vent prédit ;
- la température extérieure prédite ;
- la masse de l'aéronef (A) ;
- l'altitude maximale dudit segment (S2) ;
- la configuration aérodynamique prédite de l'aéronef (A) ; et
- la vitesse de consigne sur ledit segment (S2).

12. Procédé selon l'une des revendications 10 et 11,
**caractérisé en ce que** ledit angle de descente maximal est déterminé à partir des conditions de vol suivantes, qui sont prédites sur ledit segment (S2) :
- la poussée au ralenti de l'aéronef (A) avec tous ses moteurs en fonctionnement ;
- le vent prédit ;
- la température extérieure prédite ;
- la masse de l'aéronef (A) ;
- l'altitude maximale dudit segment (S2) ;
- la configuration aérodynamique prédite de l'aéronef (A) ; et
- la vitesse de consigne sur ledit segment (S2).

13. Procédé selon l'une quelconque des revendications 8 à 12,
**caractérisé en ce que** chaque segment (S2) présente une longueur minimale (dmin) prédéterminée.

14. Procédé selon la revendication 13,
**caractérisé en ce que**, pour pouvoir suivre au plus près le profil de terrain (PT1), on tient compte des caractéristiques suivantes pour construire ladite trajectoire verticale (TV) :
- une montée à angle de montée maximal est privilégiée par rapport à une descente à angle de descente maximal, dans le cas où le profil de terrain (PT1) tend à s'élever entre deux maxima de hauteur (23, 24, 25) ; et
- une descente à angle de descente maximal est privilégiée par rapport à une montée à angle de montée maximal, dans le cas où le profil de terrain (PT1) tend à baisser entre deux maxima de hauteur (23, 24, 25).

15. Dispositif pour construire une trajectoire de vol (TO) à basse altitude destinée à être suivie par un aéronef (A), en particulier un avion de transport militaire, ladite trajectoire de vol (TO) comprenant une trajectoire latérale (TL) et une trajectoire verticale (TV), ledit dispositif (1) comportant :
- un moyen (2) fournissant un profil de terrain (PT1) relatif à un terrain à survoler par l'aéronef (A) ;
- un ensemble (5) de sources d'informations embarquées, susceptibles d'engendrer des informations relatives à l'aéronef (A) et à son environnement ;
- un premier moyen (6) pour construire ladite trajectoire latérale (TL) de la trajectoire de vol (TO) ; et
- un deuxième moyen (7) pour construire ladite trajectoire verticale (TV) de la trajectoire de vol (TO),
**caractérisé en ce que** ledit deuxième moyen (7) construit ladite trajectoire verticale (TV), à partir du point le plus élevé du profil de terrain (PT1) sur toute la section de trajectoire latérale (TL) sur laquelle on veut calculer une trajectoire de vol (TO) à basse altitude, en amont et en aval :
- en faisant se déplacer sur ledit profil de terrain (PT1) un profil de construction (26) en forme de V, dont les branches (26A, 26B) sont déterminées respectivement par des angles de montée et de descente maximaux de l'aéronef, prévus à cet endroit ; et
- en sélectionnant une position dudit profil de construction (26), pour laquelle ses bords arrivent en tangence dudit profil de terrain (PT1), et aucune crête dudit profil de terrain (PT1) ne traverse ledit profil de construction (26), la position ainsi sélectionnée du profil de construction (26) permettant à ce dernier de former la partie de la trajectoire verticale (TV) qui est située au niveau d'une section de profil (22) définie entre deux maxima de hauteur (23, 24, 25) dudit profil de terrain (PT1), les différents maxima de hauteur (23, 24,25) pris en compte pour former la trajectoire verticale (TV) étant extraits dudit profil de terrain (PT1) à partir dudit point le plus élevé.

16. Aéronef,
**caractérisé en ce qu'**il comporte un dispositif (1) tel que celui spécifié sous la revendication 15.

## Claims

1. A method for constructing a low altitude flight trajectory (TO) intended to be followed by an aircraft (A), in particular a military transport plane, said flight trajectory (TO) comprising a lateral trajectory (TL) and a vertical trajectory (TV), according to which method:
- a terrain profile (PT1) pertaining to a terrain to be overflown by the aircraft (A) is provided together with information pertaining to the aircraft (A) and to its environment;
- said lateral trajectory (TL) of the flight trajectory (TO) is constructed; and
- said vertical trajectory (TV) of the flight trajectory (TO) is constructed,
**characterized in that** said vertical trajectory (TV) is constructed from the highest point of the terrain profile (PT1) over the whole of the lateral trajectory (TL) section over which it is desired to compute a low altitude flight trajectory (PT1), upstream and downstream:
- by making displace over said terrain profile (PT1) a V-shaped construction profile (26), whose branches (26A, 26B) are determined respectively by maximum angles of climb and of descent of the aircraft, provided at that location; and
- by selecting a position of said construction profile (26), for which its edges arrive tangential to said terrain profile (PT1), and no peak of said terrain profile (PT1) crosses said construction profile (26), the position thus selected of the construction profile (26) allowing the latter to form the part of the vertical trajectory (TV) which is situated at the level of a profile section (22) defined between two height maxima (23, 24, 25) of said terrain profile (PT1),
and **in that** the different height maxima (23, 24, 25) taken into account for forming the vertical trajectory (TV) are extracted from said terrain profile (PT1) from said highest point.

2. The method as claimed in claim 1,
**characterized in that** the two branches (26A, 26B) of the V-shaped construction profile (26) join up according to a circular arc transition phase.

3. The method as claimed in one of claims 1 and 2,
**characterized in that** two height maxima (23, 24, 25) of the terrain profile (PT1), making it possible to define a profile section (22) to be taken into account, are separated horizontally by at least a distance corresponding to a minimum length (dmin) pertaining to a segment (S2) of the vertical trajectory (TV).

4. The method as claimed in any one of claims 1 to 3,
**characterized in that**, in the case where the construction profile (26) cannot be inscribed between said two height maxima (23, 24, 25), the angle between the two branches (26A, 26B) of said construction profile (26) is increased until this inscription is made possible.

5. The method as claimed in any one of the preceding claims,
**characterized in that** said lateral trajectory (TL) of the flight trajectory (TO) is formed, in a horizontal plane, by a succession of branches (S1) which are rectilinear and which are separated from one another by first transition phases (Q1).

6. The method as claimed in claim 5,
**characterized in that** at least one of said first transition phases (Q1), between two successive branches (S1), corresponds to a circular arc of constant radius of curvature (R1, R2).

7. The method as claimed in any one of claims 5 and 6,
**characterized in that** two successive branches (S1) cross at a turning point (P1), **in that** said turning point is associated with an overfly condition pertaining to an obligation of the aircraft (A) to overfly or not to overfly this turning point (P1), and **in that** the corresponding first transition phase (Q1) takes account of this overfly condition.

8. The method as claimed in any one of the preceding claims,
**characterized in that** said vertical trajectory (TV) of the flight trajectory (TO) is formed, in a vertical plane, by a succession of segments (S2) which are rectilinear and which exhibit a constant slope.

9. The method as claimed in claim 8,
**characterized in that** the slope of each of said segments (S2) is determined as a function of said terrain profile (PT1) and of performance of the aircraft (A) and lies within a domain of slope values that is limited by a maximum angle of climb and a maximum angle of descent.

10. The method as claimed in claim 9,
**characterized in that** said maximum angles of climb and descent depend on flight conditions which are predicted over the corresponding segment (S2).

11. The method as claimed in claim 10,
**characterized in that** said maximum angle of climb is determined from the following flight conditions, which are predicted over said segment (S2):
- the maximum continuous thrust of the aircraft (A) with a faulty engine;
- the predicted wind;
- the predicted exterior temperature;
- the mass of the aircraft (A);
- the maximum altitude of said segment (S2);
- the predicted aerodynamic configuration of the aircraft (A); and
- the preset speed over said segment (S2).

12. The method as claimed in one of claims 10 and 11,
**characterized in that** said maximum angle of descent is determined from the following flight conditions, which are predicted over said segment (S2):
- the idling thrust of the aircraft (A) with all its engines operational;
- the predicted wind;
- the predicted exterior temperature;
- the mass of the aircraft (A);
- the maximum altitude of said segment (S2);
- the predicted aerodynamic configuration of the aircraft (A); and
- the preset speed over said segment (S2).

13. The method as claimed in any one of claims 8 to 12,
**characterized in that** each segment (S2) exhibits a predetermined minimum length (dmin).

14. The method as claimed in claim 13,
**characterized in that**, to be able to follow the terrain profile (PT1) as closely as possible, account is taken of the following characteristics in constructing said vertical trajectory (TV):
- a climb at maximum angle of climb is favored with respect to a descent at maximum angle of descent, in the case where the terrain profile (PT1) tends to rise between two height maxima (23, 24, 25); and
- a descent at maximum angle of descent is favored with respect to a climb at maximum angle of climb, in the case where the terrain profile (PT1) tends to drop between two height maxima (23, 24, 25).

15. A device for constructing a low altitude flight trajectory (TO) intended to be followed by an aircraft (A), in particular a military transport plane, said flight trajectory (TO) comprising a lateral trajectory (TL) and a vertical trajectory (TV), said device (1) comprising:
- a means (2) providing a terrain profile (PT1) pertaining to a terrain to be overflown by the aircraft (A);
- a set (5) of onboard information sources, able to produce information pertaining to the aircraft (A) and to its environment;
- a first means (6) for constructing said lateral trajectory (TL) of the flight trajectory (TO); and
- a second means (7) for constructing said vertical trajectory (TV) of the flight trajectory (TO),
**characterized in that** said second means (7) constructs said vertical trajectory (TV) from the highest point of the terrain profile (PT1) over the whole of the lateral trajectory (TL) section over which it is desired to compute a low altitude flight trajectory (PT1), upstream and downstream:
- by making displace over said terrain profile (PT1) a V-shaped construction profile (26), whose branches (26A, 26B) are determined respectively by maximum angles of climb and of descent of the aircraft, provided at that location; and
- by selecting a position of said construction profile (26), for which its edges arrive tangential to said terrain profile (PT1), and no peak of said terrain profile (PT1) crosses said construction profile (26), the position thus selected of the construction profile (26) allowing the latter to form the part of the vertical trajectory (TV) which is situated at the level of a profile section (22) defined between two height maxima (23, 24, 25) of said terrain profile (PT1), the different height maxima (23, 24, 25) taken into account for forming the vertical trajectory (TV) being extracted from said terrain profile (PT1) from said highest point.

16. An aircraft,
**characterized in that** it comprises a device (1) such as that specified under claim 15.

## Patentansprüche

1. Verfahren zur Erzeugung einer Flugbahn (TO) auf niedriger Höhe, der ein Flugzeug (A), insbesondere ein militärisches Transportflugzeug zu folgen hat, wobei die Flugbahn (TO) eine seitliche Flugbahn (TL) und eine vertikale Flugbahn (TV) umfasst und wobei nach dem Verfahren:
- ein Geländeprofil (PT1) eines von dem Flugzeug (A) zu überfliegenden Geländes, sowie Informationen über das Flugzeug (A) und seine Umgebung bereitgestellt werden;
- die seitliche Flugbahn (TL) der Flugbahn (TO) erzeugt wird und
- die vertikale Flugbahn (TV) der Flugbahn (TO) erzeugt wird,
**dadurch gekennzeichnet, dass** die vertikale Flugbahn (TV) ausgehend von dem höchsten Punkt des Geländeprofils (PT1) in dem gesamten Abschnitt der seitlichen Flugbahn (TL), über den man eine Flugbahn (TO) auf niedriger Höhe errechnen will, aufwärts und abwärts erzeugt wird:
- indem man über dem Geländeprofil (PT1) ein konstruiertes Profil (26) in der Form eines V, dessen Schenkel (26A, 26B) jeweils durch an dieser Stelle vorgesehene maximale Steig- und Sinkwinkel bestimmt sind, sich verschieben lässt und
- indem man eine Position des konstruierten Profils (26) auswählt, bei der seine Ränder das Geländeprofil (PT1) tangieren und kein Gebirgskamm des Geländeprofils (PT1) über das konstruierte Profil (26) hinausragt, wobei die so gewählte Position des konstruierten Profils (26) Letzterem ermöglicht, den Teil der vertikalen Flugbahn (TV) zu bilden, der im Bereich eines zwischen zwei Höhenmaxima (23, 24, 25) des Geländeprofils (PT1) definierten Profilabschnitts (22) angeordnet ist und dadurch, dass die verschiedenen zur Bildung der vertikalen Flugbahn (TV) berücksichtigten Höhenmaxima (23, 24, 25) ausgehend von dem höchsten Punkt aus dem Geländeprofil (PT1) ausgelesen werden.

2. Verfahren nach Anspruch 1,
**dadurch gekennzeichnet, dass** die beiden Schenkel (26A, 26B) des konstruierten V-förmigen Profils (26) nach einer kreisbogenförmigen Übergangsphase aneinander anschließen.

3. Verfahren nach Anspruch 1 oder 2,
**dadurch gekennzeichnet, dass** die beiden Höhenmaxima (23, 24, 25) des Geländeprofils (PT1), die es ermöglichen, einen zu berücksichtigenden Profilabschnitt (22) zu definieren, einen horizontalen Abstand voneinander aufweisen, der einer Mindestlänge (dmin) bezogen auf ein Segment (S2) der vertikalen Flugbahn (TV) entspricht.

4. Verfahren nach einem der Ansprüche 1 bis 3,
**dadurch gekennzeichnet, dass**, in dem Fall, dass das konstruierte Profil (26) nicht zwischen den beiden Höhenmaxima (23, 24, 25) eingeschrieben werden kann, der Winkel zwischen den beiden Schenkeln (26A, 26B) des konstruierten Profils (26) erhöht wird, bis er dieses Einschreiben ermöglicht.

5. Verfahren nach einem der vorhergehenden Ansprüche,
**dadurch gekennzeichnet, dass** die seitliche Flugbahn (TL) der Flugbahn (TO) in einer horizontalen Ebene durch eine Folge von Schenkeln (S1) gebildet wird, die geradlinig und durch erste Übergangsphasen (Q1) voneinander getrennt sind.

6. Verfahren nach Anspruch 5,
**dadurch gekennzeichnet, dass** mindestens eine der ersten Übergangsphasen (Q1) zwischen zwei aufeinanderfolgenden Schenkeln (S1) einem Kreisbogen mit konstantem Krümmungsradius (R1, R2) entspricht.

7. Verfahren nach Anspruch 5 oder 6,
**dadurch gekennzeichnet, dass** zwei aufeinanderfolgende Schenkel (S1) sich an einem Wendepunkt (P1) kreuzen, dadurch dass dem Wendepunkt eine Überflug-Bedingung zugeordnet wird bezogen auf einen Zwang, dass dieser Wendepunkt (P1) von dem Flugzeug (A) überflogen oder nicht überflogen wird und dadurch, dass die erste entsprechende Übergangsphase (Q1) diese Überflug-Bedingung berücksichtigt.

8. Verfahren nach einem der vorhergehenden Ansprüche,
**dadurch gekennzeichnet, dass** die vertikale Flugbahn (TV) der Flugbahn (TO) in einer vertikalen Ebene durch eine Folge von Segmenten (S2) gebildet wird, die geradlinig sind und eine konstante Steigung aufweisen.

9. Verfahren nach Anspruch 8,
**dadurch gekennzeichnet, dass** die Steigung jedes der Segmente (S2) in Abhängigkeit von dem Geländeprofil (PT1) und von Leistungen des Flugzeugs (A) bestimmt wird und in einem Steigungswerte-Bereich liegt, der durch einen maximalen Steigwinkel und einen maximalen Sinkwinkel begrenzt ist.

10. Verfahren nach Anspruch 9,
**dadurch gekennzeichnet, dass** die maximalen Steig- und Sinkwinkel von für das entsprechende Segment (S2) vorhergesagten Flugbedingungen abhängen.

11. Verfahren nach Anspruch 10,
**dadurch gekennzeichnet, dass** der maximale Steigwinkel aus den folgenden, für das Segment (S2) vorhergesagten Flugbedingungen bestimmt wird:
- dem maximalen Nennschub des Flugzeugs (A), wenn ein Motor des Flugzeugs fehlerhaft ist,
- dem vorhergesagten Wind,
- der vorhergesagten Außentemperatur,
- der Masse des Flugzeugs (A),
- der maximalen Höhe des Segments (S2),
- der vorhergesagten aerodynamischen Konfiguration des Flugzeugs (A) und
- der Sollgeschwindigkeit für das Segment (S2).

12. Verfahren nach Anspruch 10 oder 11,
**dadurch gekennzeichnet, dass** der maximale Sinkwinkel aus den folgenden, für das Segment (S2) vorhergesagten Flugbedingungen bestimmt wird:
- dem Leerlaufschub des Flugzeugs (A), wenn alle seine Motoren in Betrieb sind,
- dem vorhergesagten Wind,
- der vorhergesagten Außentemperatur,
- der Masse des Flugzeugs (A),
- der maximalen Höhe des Segments (S2),
- der vorhergesagten aerodynamischen Konfiguration des Flugzeugs (A), und
- der Sollgeschwindigkeit für das Segment (S2).

13. Verfahren nach einem der Ansprüche 8 bis 12,
**dadurch gekennzeichnet, dass** jedes Segment (S2) eine vorgegebene Mindestlänge (dmin) aufweist.

14. Verfahren nach Anspruch 13,
**dadurch gekennzeichnet, dass**, um dem Geländeprofil (PT1) möglichst nahe folgen zu können, zur Erzeugung der vertikalen Flugbahn (TV) die folgenden Merkmale berücksichtigt werden:
- ein Steigflug mit maximalem Steigwinkel hat in dem Fall, dass das Geländeprofil (PT1) zwischen zwei Höhenmaxima (23, 24, 25) eine ansteigende Tendenz aufweist, Vorrang vor einem Sinkflug mit maximalem Sinkwinkel und
- ein Sinkflug mit maximalem Sinkwinkel hat in dem Fall, dass das Geländeprofil (PT1) zwischen zwei Höhenmaxima (23, 24, 25) eine abfallende Tendenz aufweist, Vorrang vor einem Steigflug mit maximalem Steigwinkel.

15. Vorrichtung zur Erzeugung einer Flugbahn (TO) auf niedriger Höhe, der ein Flugzeug (A), insbesondere ein militärisches Transportflugzeug zu folgen hat, wobei die Flugbahn (TO) eine seitliche Flugbahn (TL) und eine vertikale Flugbahn (TV) umfasst und wobei die Vorrichtung (1) umfasst:
- ein Mittel (2), das ein Geländeprofil (PT1) eines von dem Flugzeug (A) zu überfliegenden Geländes liefert,
- eine Anordnung (5) von mitgeführten Informationsquellen, die geeignet sind, Informationen bezogen auf das Flugzeug (A) und seine Umgebung zu erzeugen,
- ein erstes Mittel (6) zur Erzeugung der seitlichen Flugbahn (TL) der Flugbahn (TO), und
- ein zweites Mittel (7) zur Erzeugung der vertikalen Flugbahn (TV) der Flugbahn (TO),
**dadurch gekennzeichnet, dass** das zweite Mittel (7) die vertikale Flugbahn (TV) ausgehend von dem höchsten Punkt des Geländeprofils (PT1) in dem gesamten Abschnitt der seitlichen Flugbahn (TL), über den man eine Flugbahn (TO) auf niedriger Höhe errechnen will, aufwärts und abwärts erzeugt:
- indem man über dem Geländeprofil (PT1) ein konstruiertes Profil (26) in der Form eines V, dessen Schenkel (26A, 26B) jeweils durch an dieser Stelle vorgesehene maximale Steig- und Sinkwinkel bestimmt sind, sich verschieben lässt und
- indem man eine Position des konstruierten Profils (26) auswählt, bei der seine Ränder das Geländeprofil (PT1) tangieren und kein Gebirgskamm des Geländeprofils (PT1) über das konstruierte Profil (26) hinausragt, wobei die so gewählte Position des konstruierten Profils (26) Letzterem ermöglicht, den Teil der vertikalen Flugbahn (TV) zu bilden, der im Bereich eines zwischen zwei Höhenmaxima (23, 24, 25) des Geländeprofils (PT1) definierten Profilabschnitts (22) angeordnet ist, wobei die verschiedenen zur Bildung der vertikalen Flugbahn (TV) berücksichtigten Höhenmaxima (23, 24, 25) ausgehend von dem höchsten Punkt aus dem Geländeprofil (PT1) ausgelesen werden.

16. Flugzeug,
**dadurch gekennzeichnet, dass** es eine Vorrichtung (1) wie die unter Anspruch 15 spezifizierte umfasst.
